# EUROPÄISCHE PATENTSCHRIFT

(11) **EP 3 081 827 B1**
(45) Veröffentlichungstag und Bekanntmachung des Hinweises auf die Patenterteilung: **25.03.2020**
(21) Anmeldenummer: 15290106.2
(22) Anmeldetag: 16.04.2015
(51) Int. Cl.: F16F 9/04

(54) **LUFTFEDERBALG MIT SEGMENTGÜRTEL**
CUSHION-TYPE AIR SPRING WITH SEGMENT BELT
SOUFFLET À COURROIE SEGMENTÉE

(43) Veröffentlichungstag der Anmeldung: 19.10.2016
(73) Patentinhaber: ContiTech Luftfedersysteme GmbH, 30165 Hannover (DE)
(72) Erfinder: Hesse, Bernd, 30880 Laatzen (DE); Racine, Jerome, 95170 Gennevilliers (FR); Czaja, Rafael, 30559 Hannover (DE)
(74) Vertreter: Kilsch, Armin Ralph

(56) Entgegenhaltungen:
- WO-A1-2008/017459
- GB-A- 2 456 750
- US-A1- 2010 289 197
- US-A1- 2014 091 504

## Beschreibung

Die Erfindung betrifft eine Luftfederung für ein Schienenfahrzeug, angeordnet zwischen Karosserie oder Wagenkasten und Fahrgestell, wobei die Luftfederung ein Arbeitsvolumen aufweist, welches durch einen mit dem Wagenkasten verbundenen Luftfederdeckel, in diesem Fall auch als Felge bezeichnet, einen Luftfederbalg und einen fahrwerkseitigen Kolben begrenzt wird. Außerdem betrifft die Erfindung ein Schienenfahrzeug mit einer solchen Luftfederung.

Luftfederungen sind aus dem Stand der Technik bekannt und bei Schienenfahrzeugen in der Regel als Sekundärfedersystem zwischen einem gefederten Wagenkasten und einem als Fahrwerk dienenden Drehgestell oder Fahrwerksschemel angeordnet. Die Luftfederung weist dabei einen Arbeits- oder Druckraum mit einem durch die oben genannten Bauteile begrenzten Volumen auf, auch Luftfederkammer oder Luftfedervolumen genannt.

Diese Luftfederkammer dient als Arbeitskammer, um Kräften, die zwischen der Felge und Deckelplatte wirken, durch ein Komprimieren eines von der Luftfederkammer eingeschlossenen Volumens an Luft oder einem anderen Arbeitsgas entgegenzuwirken. Wird die Luftfeder also in ihrer Längsachse mit Kräften beaufschlagt, wirken auf die Grundplatte und die Felge Kräfte in entgegengesetzter Richtung, so dass die Luft in der Luftfederkammer komprimiert wird. Dies verursacht wiederum ein Aufblähen des Luftfilterbalgs in Querrichtung der Luftfeder, so dass es zu entsprechenden Reaktionskräften kommt, die einem Zusammendrücken der Felge und der Grundplatte, bzw. des Kolbens entgegenwirken.

Im Stand der Technik sind allerlei Lösungen bekannt, die zu einem besseren Federungsverhalten solcher Systeme führen.

Die US 2014/091504 A1 offenbart einen Luftfederanordnung, bei der eine Luftfeder aus elastomeren Material, etwa eine Balgfeder aus Gummi, mit einer äußeren unelastischen Verstärkungsstruktur umgeben wird., die sich zwischen den Befestigungspunkten der Luftfeder über die Länge derselben erstreckt. Die Luftfeder ist hierbei nicht mit inneren, d.h. innerhalb der Luftfederwand liegenden Verstärkungselementen versehen.

Die äußere Verstärkungstruktur besteht im Wesentlichen aus einem käfigartig die Luftfeder umschließenden Element, welches ein zu starkes Aufweiten und Aufblähen der Luftfeder verhindern soll. In der Verstärkungsstruktur sind Öffnungen vorgesehen in welche sich das Wandmaterial der Luftfeder eindrücken kann.

Die US 2010/289197 A1 offenbart eine Luftfederanordnung mit einem Luftfederbalg aus elastomerem Material, der in unterschiedlichen ringförmigen Bereichen des Balgs unterschiedliche Steifigkeiten aufweist, die dadurch erreicht werden, dass die Wanddicke des Balgs unterschiedlich stark ausgebildet ist.

Die WO 2008/017459 A1 offenbart eine Luftfeder mit einem Luftfederbalg für ein Fahrzeug, wobei der Luftfederbalg zwischen einem oberen Befestigungsabschnitt und einem unteren Tauchkolben befestigt ist. Zwischen Befestigungselement und Tauchkolben ist ein Verdrängungselement vorgesehen, welches im eingefederten Zustand den Raum zwischen Tauchkolben und dem Befestigungselement im Wesentlichen ausfüllt. Damit soll verhindert werden dass der Luftfederbalg zwischen Befestigungselement und Kolbendeckel eingeklemmt wird.

Die GB 2 456 750 A offenbart eine Luftfeder mit einem durch innenliegende Festigkeitsträger verstärkten Balg, der von einer außen den Balg umgebenden Stützhülse geführt wird. Die Balgteile, die sich innerhalb der Hülse befinden und sich an die Hülse anlegen, also von außen abgestützt werden, weisen Festigkeitsträger auf, die sich lediglich in eine Richtung erstrecken, hier in Längsrichtung des Balges. Die Balgteile, die außerhalb oder innerhalb der Hülse an der Kolbenwandlung abrollen, weisen mehrere sich kreuzende Festigkeitsträger auf.

Zwischen Felge und Kolben wirken im Fahrbetrieb aber auch starke Kräfte in Querrichtung, d.h. in horizontaler Richtung der Luftfeder, die eine Federung bzw. Auslenkung des Luftfederbalgs in horizontaler Richtung bewirken. In diesem Fall verschieben sich die Felge und die Grundplatte in Querrichtung zueinander, was ebenfalls zu einem Komprimieren der Luft in der Luftfeder führt. Entsprechend der zuvor genannten Erläuterung verursacht diese Komprimierung Reaktionskräfte, die dem relativen Verschieben der Felge und der Deckelplatte in Querrichtung zueinander entgegenwirken. Solche Kräfte in Querrichtung treten insbesondere dann auf, wenn Schienenfahrzeuge mehr oder weniger enge Kurvenstrecken durchfahren und sich zum Beispiel das vordere und das hintere Drehgestell eines Wagenkastens voneinander unabhängig im Rahmen ihrer Schienenführung verdrehen. Durch das Ausdrehen der Drehgestelle beim Durchfahren von Kurven treten in horizontaler Richtung durchaus Bewegungen von mehr als 120mm abhängig vom Kurvenradius und vom Drehzapfenabstand der beiden Drehgestelle eines Wagens auf. Gleichzeitig unterliegen die Luftfedern dabei einer Verdrehung als Folge der Drehbewegungen der Drehgestelle beim Durchfahren der Kurven (Ausdrehwinkel σ).

Bei Schienenfahrzeuge mit mehreren solchen Drehgestellen dienen Luftfedern natürlich dazu, den Fahrkomfort des Schienenfahrzeugs zu gewährleisten oder zu erhöhen. Um den Fahrkomfort zu erhöhen, ist es gewünscht, die Steifigkeit der Luftfeder, d.h. des Luftfederbalgs relativ gering auszubilden. Dies führt jedoch dazu dass bei Kurvenfahrten die auftretenden Querkräfte/Lateralkräfte eine starke Verschiebung des Wagenkastens relativ zum Drehgestell bewirken können und zu erhöhten Wankbewegungen des Wagenkastens um seine Längsachse führen, ein Verhalten also, was bei engen Tunneldurchfahrten oder Bauwerken neben dem Schienenweg ausgesprochen unerwünscht ist, da vorbestimmte Durchfahrquerschnitte nicht überschritten werden dürfen. Es liegt also ein gewisser Zielkonflikt darin, dass einerseits ein hoher Komfort gewünscht ist, dass andererseits jedoch die Luftfeder ein Wanken und eine Verschiebung des Wagenkastens möglichst verhindern soll.

Um diesen Anforderungen zu genügen, sind bereits Lösungen überlegt worden, bei denen der mit dem Wagenkasten verbundene Luftfederdeckel mit kragenartigen Vorsprüngen versehen ist, die über den Umfang des Luftfederbalges unterschiedlich tief bzw. weit den Luftfederbalg umfassen oder führen und so in seinen Auslenkungen begrenzen. Solche Lösungen beinhalten jedoch erheblichen Aufwand bei der Herstellung und erhöhen durch das dazu erforderliche Material am Luftfederdeckel das Gewicht der Luftfederung.

Der Erfindung liegt die Aufgabe zu Grunde, eine Luftfeder bereitzustellen, die je nach Belastungsrichtung durch Querkräfte unterschiedliche Steifigkeiten aufweist, somit unterschiedliche Reaktionskräfte hervorruft und trotzdem leicht und einfach herzustellen ist. Die Luftfeder soll dazu geeignet sein, einem Wanken eines Wagenkastens eines Schienenfahrzeugs um die Längsachse entgegenzuwirken und gleichzeitig einen möglichst hohen Fahrkomfort zu gewährleisten.

Gelöst wird diese Aufgabe durch die Merkmale des Hauptanspruchs. Weitere vorteilhafte Ausbildungen sind in den Unteransprüchen offenbart.

Dabei ist der Luftfederbalg mindestens segmentweise über seinen Umfang mit Festigkeitsträgern so verstärkt ist, dass bei Federung bzw. Auslenkung des Luftfederbalgs in horizontaler Richtung über den Balgumfang im Bereich der verstärkten Segmente/ Umfangsbereiche eine höhere Steifigkeit des Luftfederbalgs vorhanden ist als in den nicht durch Festigkeitsträger verstärkten Umfangsbereichen.

Durch einen solchen Luftfederbalg, der in Teilbereichen seines Umfangs verstärkte Segmente aufweist, verändert man also die Steifigkeit des Luftfederbalges partiell über seinen Umfang. Damit ist in bestimmten Quer- oder Lateralrichtungen, d.h. in bestimmten senkrecht zur Luftfederachse oder Torusachse liegenden Richtungen, eine andere Steifigkeit vorhanden als in der oder den übrigen Quer- oder Lateralrichtungen. Die von seiner Steifigkeit anhängige Reaktion des Luftfederbalges bzw. der Luftfederung auf Querkräfte/Lateralkräfte ist somit je nach Richtung ihrer Einwirkung unterschiedlich. Somit kann eine Längsbewegung komfortabel und relativ weich abgefedert werden.

Die verstärkten Segmente werden durch in Teilbereichen des Luftfederbalgs innerhalb seiner Wanddicke eingelegte, vorzugsweise gummierte Festigkeitsträger bereitgestellt, insbesondere durch ggf. miteinander verwirkte und/oder gekreuzt angeordnete Textilcorde oder Stahlcorde. Luftfederbälge sind üblicherweise so aufgebaut, dass mehrere Schichten von gummiertem Gewebelagen mit verschiedenen Lagen elastomerer Schichten, d.h. mit Gummischichten verbunden werden. Üblicherweise beinhalten die Luftfederbälge eine innere Deckschicht aus einer Gummilage, zwei gummierten Gewebelagen, die so übereinander positioniert werden, dass sich ihre Gewebelagen kreuzen, und einer Außenschicht aus wiederum einer Gummilage. Die erfindungsgemäße Ausbildung der verstärkten Segmente in Luftfederbälgen erfolgt dann vorteilhafterweise dadurch, dass lediglich in Teilbereichen des Luftfederbalgs weitere Textilcorde, Stahlcorde, oder auch Gewebe oder Gewirke aus solchen Materialien bereits während der Herstellung eingelegt werden, wodurch die Herstellung der Luftfederbälge auf sehr einfache Art erfolgen kann.

Eine vorteilhafte Weiterbildung besteht darin, dass der Luftfederbalg als für insbesondere größere horizontale Auslenkungen vorgesehener Halbbalg, bzw. Halbbalgluftfeder ausgebildet ist.

Wie bereits oben geschildert, können durch das Ausdrehen der Drehgestelle beim Durchfahren von Kurven in horizontaler Richtung durchaus große Querbewegungen auftreten, abhängig vom Kurvenradius und vom Drehzapfenabstand der Drehgestelle eines Wagens. Gleichzeitig unterliegen die Luftfedern dabei einer Verdrehung in sich, nämlich durch die Verdrehung der Drehgestelle als solcher.

Für derartig große Seiten- und Drehbewegungen mussten großvolumige Luftfedern entwickelt werden, nämlich die so genannten Halbbalgluftfedern, deren Torus im Querschnitt ballonförmig-rundlich und die Felge etwa schlauchförmige umgebend ausgebildet ist. Die bei solchen Halbbalgluftfedern naturgemäß relativ weiche Kennung/geringe Steifigkeit kann mithilfe der erfindungsgemäßen Ausbildung auf einfachste Weise so angepasst werden, dass in bestimmten Querrichtungen die Steifigkeit gravierend erhöht wird und somit hervorragende gute Führungseigenschaft erreicht werden.

Eine weitere vorteilhafte Ausbildung besteht darin, dass die verstärkten Segmente des Luftfederbalgs so ausgebildet sind, dass unterschiedliche Steifigkeiten in Fahrtrichtung des Schienenfahrzeugs und in einer zur Fahrtrichtung winkligen horizontalen Richtung vorhanden sind, insbesondere in Fahrtrichtung x und in einer senkrecht zur Fahrtrichtung stehenden lateralen Richtung y. Eine solche Ausbildung der Luftfederung erlaubt ein "weiches" Anfahren des Schienenfahrzeugs und gleichzeitig ein geringes Ausweichen des Wagenkastens bei etwa einwirkenden Querkräften oder Fliehkräften, je nach Ausbildung der verstärkten Segmente. Gleiche Vorteile ergeben sich bei einer weiteren vorteilhaften Ausbildung, die darin besteht, dass die verstärkten Segmente des Luftfederbalgs so ausgebildet sind, dass unterschiedliche Steifigkeiten in beiden Fahrtrichtungen +/- x und in beiden lateralen, senkrecht zur Fahrtrichtung stehenden Querrichtungen +/- y vorhanden sind.

Eine weitere vorteilhafte Ausbildung besteht darin, dass die verstärkten Segmente des Luftfederbalgs so ausgebildet sind, dass in beiden lateralen, senkrecht zur Fahrtrichtung stehenden Querrichtungen +/- y die Steifigkeit des Luftfederbalgs erhöht ist. Dies erlaubt eine sichere Führung des Wagenkastens bei hoher Quersteifigkeit der Luftfederungen beispielsweise in Tunneldurchfahrten oder in engen Bahnhofsdurchfahrten.

Eine weitere vorteilhafte Ausbildung besteht darin, dass die verstärkten Segmente mit zueinander unterschiedlicher Steifigkeit ausgebildet sind, vorzugsweise durch Variation der Cord-Materialien oder der Cord-Dichte. Damit lassen sich auf sehr einfache Art unterschiedliche Steifigkeits-Kennungen in unterschiedlichen Querrichtungen der Luftfederung erreichen.

Besonders geeignet ist eine solche zwischen Wagenkasten und dem Drehgestell angeordnete Luftfederung für ein Schienenfahrzeug, das ein als Fahrwerk dienendes

Drehgestell mit mindestens einer Achse und daran drehbar gelagerten Rädern aufweist, sowie einen Wagenkasten , der um eine Fahrzeughochachse drehbar gelagert an dem Drehgestell befestigt ist. Üblicherweise sind solche Luftfederungen paarweise in einem Drehgestell angeordnet, nämlich so, dass ein Paar von zwei erfindungsgemäß ausgestalteten Luftfederungen vorgesehen ist, die in Fahrzeugquerrichtung voneinander beabstandet und zu einer Fahrzeuglängsachse spiegelsymmetrisch ausgebildet sind.

Anhand eines Ausführungsbeispieles soll die Erfindung näher erläutert werden. Es zeigen
- Fig. 1: eine erfindungsgemäße Luftfederung
- Fig. 2: eine Skizze eines schienengebundenen Kurzstreckentriebwagens mit der erfindungsgemäßen Luftfederung

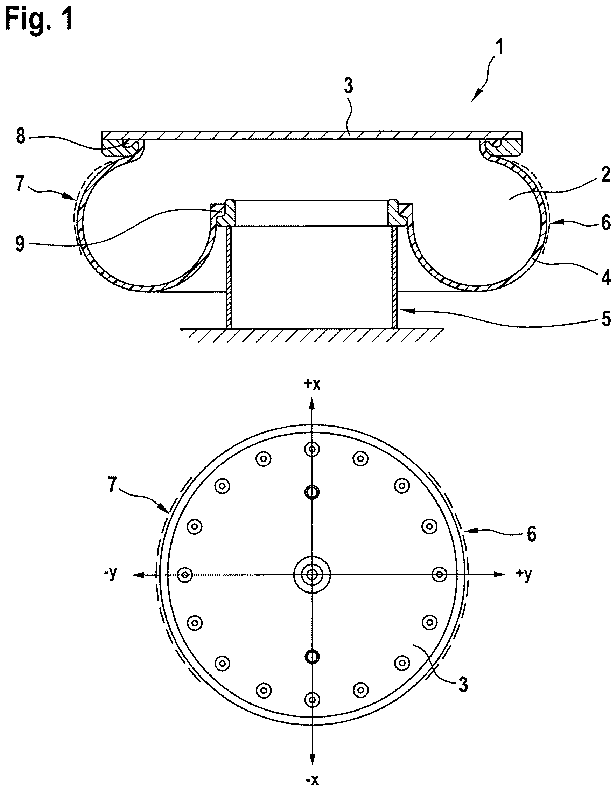

Fig. 1 zeigt eine Luftfederung 1 für ein Schienenfahrzeug, die ein Arbeitsvolumen 2 aufweist, welches durch eine mit dem Wagenkasten verbundenen Felge 3, einen Luftfederbalg 4 und einen fahrwerkseitigen Kolben 5 begrenzt wird. Der Luftfederbalg 4 ist segmentweise über seinen Umfang mit Festigkeitsträgern so verstärkt, nämlich über die Umfarigssegmente 6 und 7 ist, dass bei Federung bzw. Auslenkung des Luftfederbalgs in horizontaler y- Richtung über den Balgumfang im Bereich der verstärkten Segmente/ eine höhere Steifigkeit des Luftfederbalgs vorhanden ist als in horizontaler x-Richtung, d.h. als in den nicht durch Festigkeitsträger verstärkten Umfangsbereichen.

Der Luftfederbalg 4 ist hier als für insbesondere starke horizontale Auslenkungen ausgelegte so genannte "Halbbalgluftfeder" ausgebildet, die einen im Querschnitt ballonförmig-rundlichen Torus aufweist, deren Kernringe oder Befestigungswülste 8, 9 nicht übereinanderliegen, sondern einen unterschiedliche Durchmesser aufweisen und somit lateral unterschiedlich weit vorn der Torusachse entfernt sind, und die den Kolben bzw. die Felge etwa schlauchförmig umgibt.

Die verstärkten Segmente 6, 7 des Luftfederbalgs sind hier in beiden lateralen, senkrecht zur Fahrtrichtung stehenden Querrichtungen +/- y angeordnet, und zwar so, dass der Luftfederbalg rechtwinklig, d.h. quer zur Fahrtrichtung eine höhere Steifigkeit aufweist als in Fahrtrichtung +/- x und daher in +/- y-Richtung deutlich stärkere Rückstellkräfte erzeugt und deutlich weniger Auslenkung zulässt.

Die verstärkten Segmente, d.h. der so genannte "segmentierte Gürtel", entstehen hier durch die bei der Herstellung bereits erfolgte Integration eines aus gummiertem Stahlcord bestehenden Festigkeitsträger in den Luftfederaufbau.

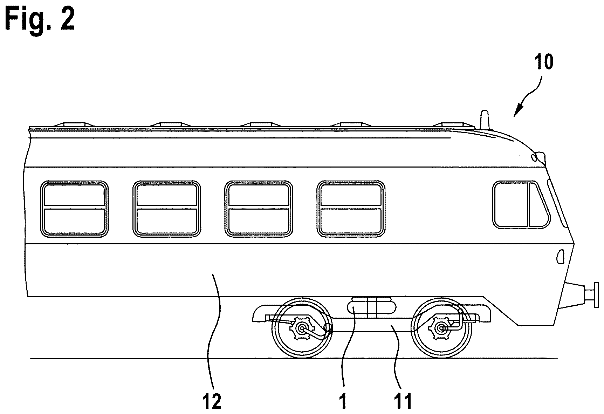

Die Fig. 2 zeigt zur Verdeutlichung des Einbauortes der erfindungsgemäßen Luftfederung in einer Skizze den vorderen Teil eines schienengebundenen Kurzstreckentriebwagens 10. Der Fahrschemel bzw. das Fahrgestell 11, ist über zwei in Fahrzeugquerrichtung +/- y voneinander beabstandete und zur Fahrzeuglängsachse spiegelsymmetrisch angeordnete erfindungsgemäßen Luftfederungen 1 mit dem Wagenkästen 12 des Triebwagens 10 verbunden.

### Bezugszeichenliste

### (Teil der Beschreibung)

- 1: Luftfederung
- 2: Arbeitsvolumen
- 3: Felge
- 4: Luftfederbalg
- 5: Kolben
- 6: Umfangssegment
- 7: Umfangssegment
- 8: Oberer Kernring bzw. Wulstring zur Befestigung des Luftfederbalgs
- 9: Unterer Kernring bzw. Wulstring zur Befestigung des Luftfederbalgs
- 10: Kurzstreckentriebwagen
- 11: Fahrgestell, Drehgestell, Drehschemel
- 12: Wagenkasten / Karosserie

## Patentansprüche

1. Luftfederung (1) für ein Schienenfahrzeug (10), angeordnet zwischen Karosserie oder Wagenkasten (12) und Fahrgestell (11), wobei die Luftfederung ein Arbeitsvolumen (2) aufweist, welches durch eine mit dem Wagenkasten verbundenen Felge (3), einen Luftfederbalg (4) und einen fahrwerkseitigen Kolben (5) begrenzt wird, wobei der Luftfederbalg (4) segmentweise in Teilbereichen seines Umfangs mit Festigkeitsträgern so verstärkt ist, dass bei Federung bzw. Auslenkung des Luftfederbalgs in horizontaler Richtung über den Balgumfang im Bereich der verstärkten Segmente/ Umfangsbereiche eine höhere Steifigkeit des Luftfederbalgs (4) vorhanden ist als in den nicht durch Festigkeitsträger verstärkten Umfangsbereichen, wobei die verstärkten Segmente durch in Teilbereichen des Umfangs des Luftfederbalgs innerhalb seiner Wanddicke eingelegte, vorzugsweise gummierte Festigkeitsträger bereitgestellt werden, insbesondere durch ggf. miteinander verwirkte und/oder gekreuzt angeordnete Textilcorde oder Stahlcorde,
**dadurch gekennzeichnet, dass** die verstärkten Segmente (6, 7) des Luftfederbalgs (4) so ausgebildet sind, dass unterschiedliche Steifigkeiten in Fahrtrichtung und in einer zur Fahrtrichtung winkligen horizontalen Richtung vorhanden sind, insbesondere in Fahrtrichtung x und in einer senkrecht zur Fahrtrichtung stehenden lateralen Richtung y.

2. Luftfederung nach Anspruch 1, bei der der Luftfederbalg () als für insbesondere horizontale Auslenkungen vorgesehene Halbbalgluftfeder ausgebildet ist.

3. Luftfederung nach einem der Ansprüche 1 oder 2, bei der die verstärkten Segmente (6, 7) des Luftfederbalgs (4) so ausgebildet sind, dass unterschiedliche Steifigkeiten in beiden Fahrtrichtungen +/- x und in beiden lateralen, senkrecht zur Fahrtrichtung stehenden Querrichtungen +/- y vorhanden sind.

4. Luftfederung nach Anspruch 3, bei der die verstärkten Segmente (6, 7) des Luftfederbalgs (4) so ausgebildet sind, dass in beiden lateralen, senkrecht zur Fahrtrichtung stehenden Querrichtungen +/- y die Steifigkeit des Luftfederbalgs erhöht ist.

5. Luftfederung nach Anspruch 4, bei der die verstärkten Segmente mit zueinander unterschiedlicher Steifigkeit ausgebildet sind, vorzugsweise durch Variation der Cord-Materialien oder der Cord-Dichte.

6. Schienenfahrzeug (10), aufweisend ein als Fahrwerk dienendes Drehgestell (11) mit mindestens einer Achse und daran drehbar gelagerten Rädern, einen Wagenkasten (12), der um eine Fahrzeughochachse drehbar gelagert an dem Drehgestell (11) befestigt ist, wobei zwischen dem Wagenkasten (12) und dem Drehgestell (11) ein oder mehrere Luftfederungen (1) nach einem der vorhergehenden Ansprüche angeordnet sind.

## Claims

1. Air suspension (1) for a rail vehicle (10), arranged between the body or superstructure (12) and the chassis (11), wherein the air suspension has a working volume (2), which is bounded by a rim (3) connected to the superstructure, an air-spring lobe (4) and a chassis-side piston (5), wherein the air-spring lobe (4) is segmentally reinforced in partial regions of its circumference by reinforcing elements in such a way that, when the air-spring lobe undergoes springing or deflection in the horizontal direction over the circumference of the lobe, there is a greater stiffness of the air-spring lobe (4) in the region of the segments/circumferential regions that are reinforced than in the circumferential regions that are not reinforced by reinforcing elements, wherein the reinforced segments are provided by preferably rubberized reinforcing elements laid in partial regions of the circumference of the air-spring lobe, within its wall thickness, in particular by textile cords or steel cords that are optionally knitted together and/or arranged crosswise,
**characterized in that** the reinforced segments (6, 7) of the air-spring lobe (4) are formed such that there are different stiffnesses in the travelling direction and in a horizontal direction at an angle to the travelling direction, in particular in the travelling direction x and in a lateral direction y perpendicular to the travelling direction.

2. Air suspension according to Claim 1, in which the air-spring lobe () is formed as a half-lobe air spring, intended for horizontal deflections in particular.

3. Air suspension according to either of Claims 1 and 2, in which the reinforced segments (6, 7) of the air-spring lobe (4) are formed such that there are different stiffnesses in the two travelling directions +/- x and in the two lateral transverse directions +/- y, perpendicular to the travelling direction.

4. Air suspension according to Claim 3, in which the reinforced segments (6, 7) of the air-spring lobe (4) are formed such that the stiffness of the air-spring lobe is increased in both lateral transverse directions +/- y, perpendicular to the travelling direction.

5. Air suspension according to Claim 4, in which the reinforced segments are formed with different stiffnesses from one another, preferably by variation of the cord materials or the cord density.

6. Rail vehicle (10), having a bogie (11) serving as a chassis, with at least one axle and wheels rotatably mounted thereon, a superstructure (12), which is fastened on the bogie (11) while mounted rotatably about a vertical vehicle axis, wherein one or more air suspensions (1) according to one of the preceding claims are arranged between the superstructure (12) and the bogie (11).

## Revendications

1. Suspension pneumatique (1) pour un véhicule ferroviaire (10), disposée entre une carrosserie ou une caisse de wagon (12) et un châssis (11), la suspension pneumatique présentant un volume de travail (2) qui est limité par une jante (3) reliée à la caisse de wagon, un soufflet de ressort pneumatique (4) et un piston (5) du côté du mécanisme de roulement, le soufflet de ressort pneumatique (4) étant renforcé de manière segmentée dans des régions partielles de sa périphérie avec des renforts de telle sorte que lors de la compression ou de la déviation du soufflet de ressort pneumatique dans la direction horizontale, on obtienne, sur la périphérie du soufflet dans la région des segments/des régions périphériques renforcés, une plus grande rigidité du soufflet de ressort pneumatique (4) que dans les régions périphériques non renforcées par les renforts, les segments renforcés étant fournis par des renforts de préférence caoutchoutés introduits dans des régions partielles de la périphérie du soufflet de ressort pneumatique à l'intérieur de son épaisseur de paroi, en particulier par des câbles textiles ou des câbles d'acier disposés de manière éventuellement emmêlée et/ou entrecroisée les uns avec les autres,
**caractérisée en ce que**
les segments renforcés (6, 7) du soufflet de ressort pneumatique (4) sont réalisés de telle sorte que l'on obtienne différentes rigidités dans la direction de conduite et dans une direction horizontale, orientée suivant un certain angle par rapport à la direction de conduite, en particulier dans la direction de conduite x et dans une direction latérale y perpendiculaire à la direction de conduite.

2. Suspension pneumatique selon la revendication 1, dans laquelle le soufflet de ressort pneumatique () est réalisé sous forme de ressort pneumatique à demi-soufflet prévu notamment pour des déviations horizontales.

3. Suspension pneumatique selon l'une quelconque des revendications 1 ou 2, dans laquelle les segments renforcés (6, 7) du soufflet de ressort pneumatique (4) sont réalisés de telle sorte que l'on obtienne différentes rigidités dans les deux directions de conduite +- x et dans les deux directions transversales latérales +- y perpendiculaires à la direction de conduite.

4. Suspension pneumatique selon la revendication 3, dans laquelle les segments renforcés (6, 7) du soufflet de ressort pneumatique (4) sont réalisés de telle sorte que la rigidité du soufflet de ressort pneumatique soit accrue dans les deux directions transversales latérales +- y, perpendiculaires à la direction de conduite.

5. Suspension pneumatique selon la revendication 4, dans laquelle les segments renforcés sont réalisés avec une rigidité différente les uns des autres, de préférence par variation des matériaux des câbles ou de la densité des câbles.

6. Véhicule ferroviaire (10) présentant un bogie (11) servant de mécanisme de roulement, avec au moins un essieu et des roues supportées à rotation sur celui-ci, une caisse de wagon (12) qui est fixée au bogie (11) de manière supportée à rotation autour d'un axe vertical du véhicule, une ou plusieurs suspensions pneumatiques (1) selon l'une quelconque des revendications précédentes étant disposées entre la caisse de wagon (12) et le bogie (11).
